# EUROPÄISCHE PATENTANMELDUNG

(11) **EP 1 136 865 A2**
(43) Veröffentlichungstag der Anmeldung: **26.09.2001**
(21) Anmeldenummer: 01440038.6
(22) Anmeldetag: 19.02.2001
(51) Int. Cl.: G02B 6/42, H04B 10/06

(54) **Optischer Empfänger**

(30) Priorität: 08.03.2000 DE 10011287
(71) Anmelder: ALCATEL, 75008 Paris (FR)
(72) Erfinder: Braun, Klaus, 70435 Stuttgart (DE)
(74) Vertreter: Menzietti, Domenico, Dipl.-Ing

(57) **Zusammenfassung**

Aufgabe der Erfindung ist es, einen optischen Empfänger bereitzustellen, der optische Signale optimiert empfangen kann. Gelöst wird diese Aufgabe durch einen optischen Empfänger (5), der insbesondere dadurch gekennzeichnet ist, dass die beiden Enden von zwei optischen Fasern (8, 9; 12, 13; 16, 17), die zur Übertragung von optischen Signalen dienen, direkt vor der aktiven Fläche (7; 11; 15) der Photodiode (6; 10; 14) des optischen Empfängers (5) derart angeordnet sind, dass die Photodiode (6; 10; 14) direkt optische Signale von beiden optischen Fasern (8, 9; 12, 13; 16, 17) empfangen kann. Dies hat den Vorteil, dass weder zusätzliche Verluste auftreten noch zusätzliche Bauelemente benötigt werden. Zudem werden die Herstellungskosten minimiert sowie die Empfangsqualität optimiert. Beim ersten Ausführungsbeispiel sind die beiden optischen Fasern (8, 9) in einem Winkel von 10 bis 90 Grad zueinander angeordnet, beim zweiten sind die beiden optischen Fasern (12, 13) parallel zueinander angeordnet und die Stirnflächen der Faserenden angeschrägt und haben zueinander einen Winkel von 90 bis 180 Grad, beim dritten sind die beiden optischen Fasern (16, 17) parallel zueinander angeordnet und die aktive Fläche (15) der Photodiode (14) ist als ovale Fläche ausgebildet.

## Beschreibung

Die Erfindung betrifft einen optischen Empfänger.

In optischen Systemen beinhalten optische Sender vielfach Laserdioden zur Erzeugung optischer Signale, die über optische Fasern, z.B. Glasfaserkabel, zu optischen Empfängern übertragen werden, die zur elektro-optischen Umsetzung vielfach Photodioden einsetzen.

Optische Systeme sind oftmals als Punkt-zu-Mehrpunkt Verteilnetze ausgebildet. Von einem optischen Sender werden über ein passives optisches Verteilnetz aus optischen Leitungen und optischen Splittern optische Signale zu einer Vielzahl von optischen Empfängern übertragen. Ein solches optisches System wird z.B. zur Verteilung von Kabelfernsehsignalen eingesetzt.

Tritt eine Störung auf einer optischen Teilstrecke auf, z.B. durch einen Faserbruch, z.B. infolge von Baggerarbeiten, empfängt mindestens ein optischer Empfänger, im Regelfall allerdings eine Vielzahl von optischen Empfängern keine optischen Signale mehr vom optischen Sender. Um dies zu verhindern sind bereits viele optische Systeme mit einer sogenannten Path-Link-Protection ausgestattet. Die Path-Link-Protection stellt einen Alternativpfad zur Verfügung für den Fall, dass ein Hauptpfad gestört ist. Der optische Sender muss dabei so ausgestaltet sein, dass er im fehlerfreien Fall optische Signale mindestens über die optischen Hauptleitungen aussendet und im Fehlerfall optische Signale zusätzlich oder ausschließlich über die Alternativleitungen aussendet. Die optischen Empfänger müssen so ausgestaltet sein, dass sie im fehlerfreien Fall optische Signale über die Hauptleitungen empfangen können und im Fehlerfall optische Signale über die Alternativleitungen empfangen können.

Bisher sind drei Lösungen zur Realisierung von optische Empfängern für optische Path-Link-Protection-Systeme bekannt, die im folgenden kurz dargestellt werden:
1. Es wird ein üblicher optischer Empfänger mit einem Eingang und einer Photodiode benutzt. Vor den optischen Empfänger wird ein optischer Schalter platziert, der im fehlerfreien Fall die optischen Signale der Hauptleitung weiterleitet und im Fehlerfall die optischen Signale der Alternativleitung. Für jeden optischen Empfänger wird ein Schalter benötigt. Der Schalter sowie die Mittel zu seiner Ansteuerung sind relativ teuer. Zudem ist der Schalter relativ fehleranfällig.
2. Es werden zwei übliche optische Empfänger, jeweils mit einem Eingang und einer Photodiode benutzt. Ein optischer Empfänger dient dem Empfang der optischen Signale über die Hauptleitung, der andere dem Empfang optischer Signale über die Alternativleitung. Die Ausgänge beider Empfänger werden einem elektrischen Schalter oder einem Kombiner zugeführt. Diese Variante ist sehr teuer.
3. Es wird ein üblicher optischer Empfänger mit einem Eingang und einer Photodiode benutzt. Vor den optischen Empfänger wird ein optischer Kombiner platziert. Der optische Kombiner überlagert die über die Hauptleitung empfangenen optischen Signale mit den über die Alternativleitung empfangenen optischen Signale. Beim optischen Kombiner werden Monomode-Fasern eingesetzt. Der optische Kombiner erzeugt einen Leistungsverlust von 3 dB. Dadurch wird das Signal-zu-Rausch-Verhältnis reduziert, was die Empfangsqualität mindert.

Aufgabe der Erfindung ist es, einen optischen Empfänger bereitzustellen, der optische Signale optimiert empfangen kann.

Gelöst wird diese Aufgabe durch einen optischen Empfänger gemäß Patentanspruch 1. Der optische Empfänger ist insbesondere dadurch gekennzeichnet, dass die beiden Enden von zwei optischen Fasern, die zur Übertragung von optischen Signalen dienen, direkt vor der aktiven Fläche der Photodiode des optischen Empfängers derart angeordnet sind, dass die Photodiode direkt optische Signale von beiden optischen Fasern empfangen kann.

Dies hat den Vorteil, dass weder zusätzliche Verluste auftreten noch zusätzliche Bauelemente benötigt werden. Zudem werden die Herstellungskosten minimiert sowie die Empfangsqualität optimiert.

Vorteilhafte Ausgestaltungen der Erfindung sind den abhängigen Ansprüchen zu entnehmen.

Im folgenden wird die Erfindung anhand von vier Ausführungsbeispielen unter Zuhilfenahme von vier Figuren erläutert. Es zeigen:
- Fig.1: einen Ausschnitt eines Path-Link-Protection Systems,
- Fig.2: eine schematische Darstellung eines Ausschnitts einer ersten Variante eines erfindungsgemäßen optischen Empfängers,
- Fig.3: eine schematische Darstellung eines Ausschnitts einer zweiten Variante eines erfindungsgemäßen optischen Empfängers,
- Fig.4: eine schematische Darstellung eines Ausschnitts einer dritten Variante eines erfindungsgemäßen optischen Empfängers und
- Fig.5: eine schematische Darstellung eines Ausschnitts einer vierten Variante eines erfindungsgemäßen optischen Empfängers.

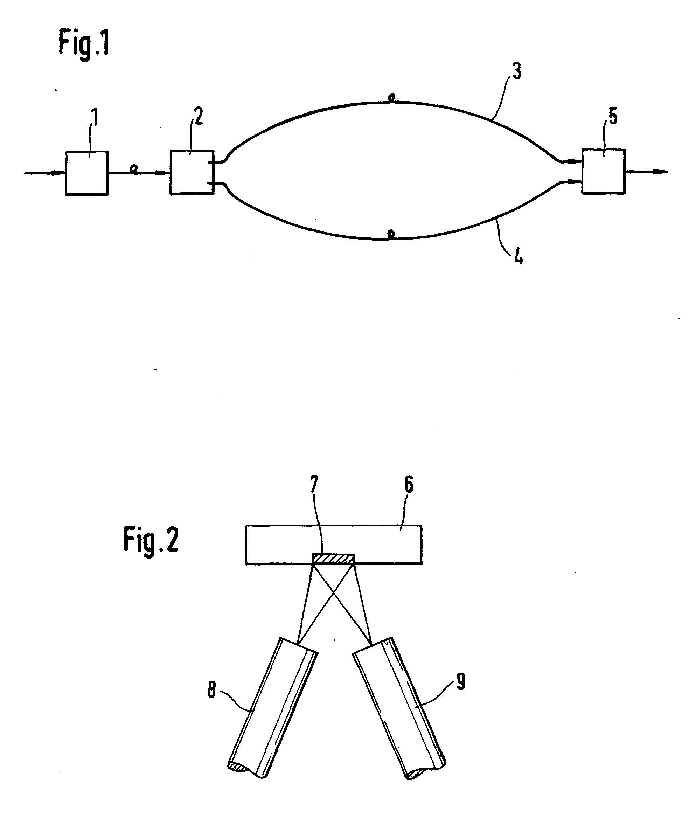

Das erste Ausführungsbeispiel wird nun unter Zuhilfenahme der Figuren 1 und 2 erläutert. Fig. 1 zeigt einen Ausschnitt eines Path-Link-Protection Systems. Der Ausschnitt beinhaltet einen optischen Sender 1, einen optischen Schalter 2, eine Hauptleitung 3, eine Alternativleitung 4 und einen optischen Empfänger 5.

Der optische Sender beinhaltet eine Laserdiode mittels derer zu übertragene elektrische Signale, die bereits moduliert und gegebenenfalls komprimiert worden sind, direkt in optische Signale umgesetzt werden. Die optischen Signale werden zum optischen Schalter 2 übertragen. Der optische Schalter 2 leitet die empfangenen optischen Signale im Regelfall, dies ist der fehlerfreie Fall, über die optische Hauptleitung 3, die beispielsweise als optische Glasfaserleitung ausgebildet ist, zum optischen Empfänger 5 weiter. Im Fehlerfall, d.h. wenn auf der Hauptleitung 3 eine Störung auftritt, z.B. verursacht durch Baggerarbeiten, kann der optische Empfänger 5 die über die Hauptleitung 3 ausgesendeten optischen Signale nicht mehr detektieren. In diesem Fall leitet der optische Schalter 2 die optischen Signale anstelle über die Hauptleitung 3 über die Alternativleitung 4, die beispielsweise als optische Glasfaserleitung ausgebildet ist, weiter. Die optischen Signale gelangen nun über die Alternativleitung 4 zum optischen Empfänger 5. Der optische Empfänger 5 muss in beiden Fällen, d.h. bei Übertragung der optischen Signale über die Hauptleitung 3 und bei Übertragung der Signale über die Alternativleitung 4, in der Lage sein die optischen Signale zu detektieren. Er ist dazu speziell ausgebildet, was nachfolgend anhand Fig. 2 weiter erläutert wird.

Fig. 2 zeigt einen Ausschnitt einer ersten Variante eines erfindungsgemäßen optischen Empfängers. Der Ausschnitt beinhaltet eine Photodiode 6 sowie zwei optische Fasern 8 und 9.

Die Photodiode 6 hat eine aktive Fläche 7, auf der die aus den optischen Fasern 8 und 9 austretenden optischen Signale auftreffen und mit deren Hilfe die optisch/elektrische Umsetzung der optischen Signale durchgeführt wird. Die generierten elektrischen Signale werden über übliche Verarbeitungseinrichtungen beinhaltend beispielsweise einen Prozessor, einen Speicher, einen Dekodierer, einen Dekomprimierer, etc. weiter verarbeitet. Im Fall von Kabelfernsehverteilsystemen können die Verarbeitungseinrichtungen auch einfach nur als Verstärker ausgeführt sein.

Die beiden Enden der zwei optischen Fasern 8 und 9, die zur Übertragung der optischen Signale dienen sind direkt vor der aktiven Fläche 7 der Photodiode 6 derart angeordnet, dass die Photodiode 6 direkt optische Signale von beiden optischen Fasern 8 und 9 empfangen kann. Die beiden optischen Fasern 8 und 9 sind in einem Winkel von 10 bis 90 Grad zueinander angeordnet. In einer bevorzugten Ausführungsform sind die beiden optischen Fasern 8 und 9 in einem Winkel von 10 bis 20 Grad zueinander angeordnet. Die Achse der optischen Faser 8 kann z.B. senkrecht zur aktiven Fläche 7 ausgerichtet sein, die Achse der optische Faser 9 in einem Winkel von 10 Grad zur Achse der optischen Faser 8 rechts oder links neben der optischen Faser 8.

Die aus den optischen Fasern 8 und 9 austretenden optischen Signale erzeugen jeweils einen Lichtkegel, der auf die Photodiode 6 auftrifft. Im Idealfall entspricht die Fläche jedes Lichtkegels der Fläche der aktiven Fläche 7 der Photodiode 6. Durch einen definierten Abstand zwischen Faserende und aktiver Fläche 7 kann die Kongruenz von Lichtkegelfläche und aktiver Fläche 7 eingestellt werden. Vorteilhafterweise sind im optischen Empfänger mechanische Justiervorrichtungen vorgegeben, in denen die Faserenden arretiert werden. Die Justiervorrichtungen enthalten beispielsweise Nuten, in denen die Faserenden eingeklemmt werden. Die Justiervorrichtungen sind derart ausgebildet, dass bei Einlegen der beiden optischen Fasern 8 und 9 ein definierter Winkel zwischen den Faserenden und ein definierter Abstand zur aktiven Fläche 7 automatisch eingestellt wird.

Die Größe der aktiven Fläche 7 ist optimiert auf den Empfang von optischen Signalen aus einer optischen Faser und entspricht damit einer aktiven Fläche einer handelsüblichen Photodiode 6. Durch die Positionierung der beiden optischen Fasern 8 und 9 in einem definierten Winkel zueinander wird erreicht, dass mittels einer handelsüblichen Photodiode 6 auch optische Signale aus zwei optischen Fasern empfangen werden können. Zwischen Photodiode 6 und den optischen Fasern 8 und 9 befindet sich Luft. Die aus den optischen Fasern 8 und 9, die zur Hauptleitung 3 bzw. zur Alternativleitung 4 aus Fig. 1 korrespondieren, austretenden optischen Signale treffen direkt auf die aktive Fläche 7, was zu einem optimierten Empfang beiträgt. Im fehlerfreien Fall werden optische Signale über die Hauptleitung 3 übertragen und treffen über die optische Faser 8 auf Photodiode 6. Im Fehlerfall werden die optischen Signale über Alternativleitung 4 übertragen und treffen über die optische Faser 9 auf die Photodiode 6.

Um optische Reflexionen, z.B. aus der optischen Faser 8 austretende optische Signale, die an der aktiven Fläche 7 derart reflektiert werden, dass sie in die optische Faser 9 gelangen, zu verringern, kann die Photodiode 6 mit einer in der Zeichenebene liegenden und parallel zur aktiven Fläche 7 verlaufenden Drehachse schräg angeordnet werden.

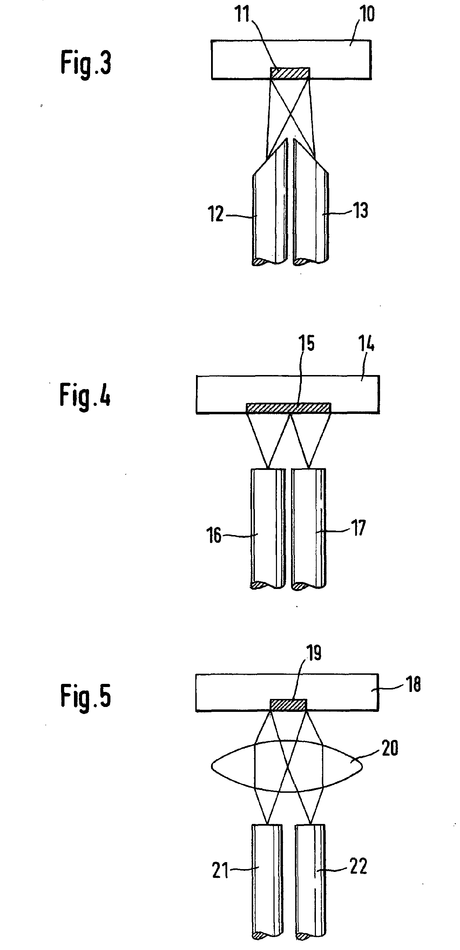

Das zweite Ausführungsbeispiel wird nun unter Zuhilfenahme von Fig. 3 erläutert. Fig. 3 zeigt einen Ausschnitt einer zweiten Variante eines erfindungsgemäßen optischen Empfängers. Der Ausschnitt beinhaltet eine Photodiode 10 sowie zwei optische Fasern 12 und 13.

Die Photodiode 10 hat eine aktive Fläche 11, auf der die aus den optischen Fasern 12 und 13 austretenden optischen Signale auftreffen und mit deren Hilfe die optisch/elektrische Umsetzung der optischen Signale durchgeführt wird. Die generierten elektrischen Signale werden über übliche Verarbeitungseinrichtungen beinhaltend beispielsweise einen Prozessor, einen Speicher, einen Dekodierer, einen Dekomprimierer, etc. weiter verarbeitet. Im Fall von Kabelfernsehverteilsystemen können die Verarbeitungseinrichtungen auch einfach nur als Verstärker ausgeführt sein.

Die beiden Enden der zwei optischen Fasern 12 und 13, die zur Übertragung der optischen Signalen dienen sind direkt vor der aktiven Fläche 11 der Photodiode 10 derart angeordnet, dass die Photodiode 10 direkt optische Signale von beiden optischen Fasern 12 und 13 empfangen kann. Die beiden optischen Fasern 12 und 13 sind parallel zueinander angeordnet. Die Stirnflächen der Faserenden sind angeschrägt und weisen zueinander einen Winkel von 90 bis 180 Grad auf. Durch den schrägen Bruch der Fasern 12 und 13 werden die austretenden optischen Signale am Glas-Luft-Übergang vom Lot weggebrochen und treffen auf die aktive Fläche 11 auf.

Die aus den optischen Fasern 12 und 13 austretenden optischen Signale erzeugen jeweils einen Lichtkegel, der auf die Photodiode 10 auftrifft. Im Idealfall entspricht die Fläche jedes Lichtkegels der Fläche der aktiven Fläche 11 der Photodiode 10. Durch einen definierten Abstand zwischen Faserende und aktiver Fläche 11 kann die Kongruenz von Lichtkegelfläche und aktiver Fläche 11 eingestellt werden. Vorteilhafterweise sind im optischen Empfänger mechanische Justiervorrichtungen vorgegeben, in denen die Faserenden arretiert werden. Die Justiervorrichtungen enthalten beispielsweise Nuten, in denen die Faserenden eingeklemmt werden. Die Justiervorrichtungen sind derart ausgebildet, dass bei Einlegen der beiden optischen Fasern 12 und 13 diese automatisch parallel liegen und in einem definierten Abstand zur aktiven Fläche 11.

Die Größe der aktiven Fläche 11 ist optimiert auf den Empfang von optischen Signalen aus einer optischen Faser und entspricht damit einer aktiven Fläche einer handelsüblichen Photodiode 11. Durch die Positionierung der beiden optischen Fasern 12 und 13 beinhaltend Faserenden mit angeschrägten Stirnflächen wird erreicht, dass mittels einer handelsüblichen Photodiode 10 auch optische Signale aus zwei optischen Fasern empfangen werden können. Zwischen Photodiode 10 und den optischen Fasern 12 und 13 befindet sich Luft. Die aus den optischen Fasern 12 und 13, die zur Hauptleitung 3 bzw. zur Alternativleitung 4 aus Fig. 1 korrespondieren, austretenden optischen Signale treffen direkt auf die aktive Fläche 11, was zu einem optimierten Empfang beiträgt. Im fehlerfreien Fall werden optische Signale über die Hauptleitung 3 übertragen und treffen über die optische Faser 12 auf Photodiode 10. Im Fehlerfall werden die optischen Signale über Alternativleitung 4 übertragen und treffen über die optische Faser 13 auf die Photodiode 10.

Um optische Reflexionen, z.B. aus der optischen Faser 12 austretende optische Signale, die an der aktiven Fläche 11 derart reflektiert werden, dass sie in die optische Faser 13 gelangen, zu verringern, kann die Photodiode 10 mit einer in der Zeichenebene liegenden und parallel zur aktiven Fläche 11 verlaufenden Drehachse schräg angeordnet werden.

Die parallele Anordnung der optischen Fasern 12 und 13 ist eine besonders platzsparende Variante. Dies hat Vorteile beim sogenannten packaging, d.h. wenn mehrere Photodioden, z.B. mehrerer optischer Empfänger nebeneinander platziert werden. Unter packaging wird auch der Einbau eines Diodenchips mit Faserkopplung in ein Gehäuse verstanden. Sehr häufig wird ein zylindrisches Gehäuse verwendet, an dessen Boden der Chip angebracht ist; an der Seite wird die Faser herausgeführt. Im zweiten Ausführungsbeispiel können die zwei Fasern parallel in einer Faserhalterung (-fixierung) herausgeführt werden.

Das dritte Ausführungsbeispiel wird nun unter Zuhilfenahme von Fig. 4 erläutert. Fig. 4 zeigt einen Ausschnitt einer dritten Variante eines erfindungsgemäßen optischen Empfängers. Der Ausschnitt beinhaltet eine Photodiode 14 sowie zwei optische Fasern 16 und 17.

Die Photodiode 14 hat eine aktive Fläche 15, auf der die aus den optischen Fasern 16 und 17 austretenden optischen Signale auftreffen und mit deren Hilfe die optisch/elektrische Umsetzung der optischen Signale durchgeführt wird. Die generierten elektrischen Signale werden über übliche Verarbeitungseinrichtungen beinhaltend beispielsweise einen Prozessor, einen Speicher, einen Dekodierer, einen Dekomprimierer, etc. weiter verarbeitet. Im Fall von Kabelfernsehverteilsystemen können die Verarbeitungseinrichtungen auch einfach nur als Verstärker ausgeführt sein.

Die beiden Enden der zwei optischen Fasern 16 und 17, die zur Übertragung der optischen Signalen dienen sind direkt vor der aktiven Fläche 15 der Photodiode 14 derart angeordnet, dass die Photodiode 14 direkt optische Signale von beiden optischen Fasern 16 und 17 empfangen kann. Die beiden optischen Fasern 16 und 17 sind parallel zueinander angeordnet. Die aktive Fläche 15 der Photodiode 14 ist als ovale Fläche ausgebildet. Sie ist gegenüber der üblichen Größe einer aktiven Fläche vergrößert. Eine übliche aktive Fläche einer Photodiode ist rund ausgebildet. Sie ist damit auf den Empfang eines Lichtkegels optimiert. Die erfindungsgemäße ovale aktive Fläche 15 ist auf den Empfang von zwei Lichtkegeln optimiert. Die beiden Lichtkegel können sich überschneiden oder ohne Überschneidung nebeneinander auf die aktive Fläche 15 auftreffen. Um die Kapazität zu reduzieren ist die aktive Fläche 15 nicht rund ausgebildet, sondern derart, dass sie beide Lichtkegel umfasst und nur minimal darüber hinausgeht, im Idealfall exakt mit der Fläche der beiden Lichtkegel übereinstimmt. Eine Ausbildung der aktiven Fläche 15 in maximaler Übereinstimmung mit den auf sie auftreffenden Lichtkegeln, z.B. als ovale Fläche, Langloch, acht, zwei nebeneinanderliegenden runden Flächen, zwei teilweise überlappender runder Flächen oder dergleichen ist damit optimal.

Durch einen definierten Abstand zwischen Faserende und aktiver Fläche 15 kann die Kongruenz von Lichtkegelfläche und aktiver Fläche 15 eingestellt werden. Vorteilhafterweise sind im optischen Empfänger mechanische Justiervorrichtungen vorgegeben, in denen die Faserenden arretiert werden. Die Justiervorrichtungen enthalten beispielsweise Nuten, in denen die Faserenden eingeklemmt werden. Die Justiervorrichtungen sind derart ausgebildet, dass bei Einlegen der beiden optischen Fasern 16 und 17 diese automatisch parallel liegen und in einem definierten Abstand zur aktiven Fläche 15.

Zwischen Photodiode 14 und den optischen Fasern 16 und 17 befindet sich Luft. Die aus den optischen Fasern 16 und 17, die zur Hauptleitung 3 bzw. zur Alternativleitung 4 aus Fig. 1 korrespondieren, austretenden optischen Signale treffen direkt auf die aktive Fläche 15, was zu einem optimierten Empfang beiträgt. Im fehlerfreien Fall werden optische Signale über die Hauptleitung 3 übertragen und treffen über die optische Faser 16 auf Photodiode 14. Im Fehlerfall werden die optischen Signale über Alternativleitung 4 übertragen und treffen über die optische Faser 17 auf die Photodiode 14.

Um optische Reflexionen, z.B. aus der optischen Faser 16 austretende optische Signale, die an der aktiven Fläche 15 derart reflektiert werden, dass sie in die optische Faser 17 gelangen, zu verringern, kann die Photodiode 14 mit einer in der Zeichenebene liegenden und parallel zur aktiven Fläche 15 verlaufenden Drehachse schräg angeordnet werden.

Die parallele Anordnung der optischen Fasern 16 und 17 ist eine besonders platzsparende Variante. Dies hat Vorteile beim sogenannten packaging, d.h. wenn mehrere Photodioden, z.B. mehrerer optischer Empfänger nebeneinander platziert werden. Unter packaging wird auch der Einbau eines Diodenchips mit Faserkopplung in ein Gehäuse verstanden. Sehr häufig wird ein zylindrisches Gehäuse verwendet, an dessen Boden der Chip angebracht ist; an der Seite wird die Faser herausgeführt. Im dritten Ausführungsbeispiel können die zwei Fasern parallel in einer Faserhalterung (-fixierung) herausgeführt werden.

Beim dritten Ausführungsbeispiel wird eine neuartige Photodiode mit einer ovalen (oder dergleichen) aktiven Fläche eingesetzt. Diese neue Photodiode kann auch bei den ersten beiden Ausführungsbeispielen eingesetzt werden. Durch die Verwendung der neuen Photodiode, gegebenenfalls mit einer gegenüber der ovalen aktiven Fläche 15 kleineren ovalen aktiven Fläche, kann beim ersten Ausführungsbeispiel ein kleinerer Winkel zwischen den beiden optischen Fasern verwendet werden; beim zweiten Ausführungsbeispiel kann ein größerer Winkel zwischen den angeschrägten Stirnflächen der Faserenden verwendet werden. Dies ist beim ersten Ausführungsbeispiel vorteilhaft für das packaging, beim zweiten Ausführungsbeispiel vereinfacht es die Herstellung der Faserenden.

Das vierte Ausführungsbeispiel wird nun unter Zuhilfenahme von Fig. 5 erläutert. Fig. 5 zeigt einen Ausschnitt einer vierten Variante eines erfindungsgemäßen optischen Empfängers. Der Ausschnitt beinhaltet eine Photodiode 18, ein lichtbrechendes Medium 20 sowie zwei optische Fasern 21 und 22.

Die Photodiode 18 hat eine aktive Fläche 19, auf der die aus den optischen Fasern 21 und 22 austretenden optischen Signale nach Durchlaufen des lichtbrechenden Mediums 20 auftreffen und mit deren Hilfe die optisch/elektrische Umsetzung der optischen Signale durchgeführt wird. Die generierten elektrischen Signale werden über übliche Verarbeitungseinrichtungen beinhaltend beispielsweise einen Prozessor, einen Speicher, einen Dekodierer, einen Dekomprimierer, etc. weiter verarbeitet. Im Fall von Kabelfernsehverteilsystemen können die Verarbeitungseinrichtungen auch einfach nur als Verstärker ausgeführt sein.

Die beiden Enden der zwei optischen Fasern 21 und 22, die zur Übertragung der optischen Signalen dienen sind zusammen mit dem optischen Medium 20 direkt vor der aktiven Fläche 19 der Photodiode 18 derart angeordnet, dass die Photodiode 10 optische Signale von beiden optischen Fasern 12 und 13 empfangen kann. Die beiden optischen Fasern 21 und 22 sind parallel zueinander angeordnet. Optional können die Stirnflächen der Faserenden angeschrägt werden und zueinander einen Winkel von 90 bis 180 Grad aufweisen. Durch den schrägen Bruch der Fasern 21 und 22 werden die austretenden optischen Signale am Glas-Luft-Übergang vom Lot weggebrochen und treffen auf das lichtbrechende Medium 20 auf.

Die aus den optischen Fasern 12 und 13 austretenden optischen Signale erzeugen jeweils einen Lichtkegel, der im lichtbrechenden Medium gebrochen wird und anschließend auf die Photodiode 18 auftrifft. Im Idealfall entspricht die Fläche jedes gebrochenen Lichtkegels der Fläche der aktiven Fläche 19 der Photodiode 18. Durch einen definierten Abstand zwischen Faserende und aktiver Fläche 19 kann die Kongruenz von Lichtkegelfläche und aktiver Fläche 19 eingestellt werden. Vorteilhafterweise sind im optischen Empfänger mechanische Justiervorrichtungen vorgegeben, in denen die Faserenden arretiert werden. Die Justiervorrichtungen enthalten beispielsweise Nuten, in denen die Faserenden eingeklemmt werden. Die Justiervorrichtungen sind derart ausgebildet, dass bei Einlegen der beiden optischen Fasern 21 und 22 diese automatisch parallel liegen und in einem definierten Abstand zur aktiven Fläche 19. Des weiteren ist eine mechanische Justiervorrichtung für das lichtbrechende Medium 20 vorgesehen. Das lichtbrechende Medium 20 ist beispielsweise als Linse ausgeführt. Die Linse kann eine konkave Linse sein. Die Linse kann auch als Kugellinse ausgeführt sein. Die konkave Linse wird derart arretiert, dass ihre Längsachse parallel zu der aktiven Fläche 19 angeordnet ist und dass ihre Querachse (im Idealfall mittig) durch die aktive Fläche 19 verläuft. Die beiden Faserenden 21 und 22 sind links und rechts parallel neben der Querachse der Linse angeordnet. Die äußeren Lichtstrahlen der aus den beiden Faserenden austretenden Lichtkegel werden beim Durchlaufen der Linse derart gebrochen, dass sie auf die äußeren Kanten der aktiven Fläche 19 auftreffen. Die Abstände zwischen den Faserenden 21, 22, der Linse und der aktiven Fläche 19 sowie der durch die Form der Linse vorgegebene Brechungsindex werden derart gewählt und aufeinander abgestimmt, dass die Auftrefffläche der Lichtkegel mit der Größe der aktiven Fläche 19 möglichst übereinstimmt.

Die Größe der aktiven Fläche 19 ist optimiert auf den Empfang von optischen Signalen aus einer optischen Faser und entspricht damit einer aktiven Fläche einer handelsüblichen Photodiode 18. Durch die Positionierung der beiden optischen Fasern 21, 22 beinhaltend optional Faserenden mit angeschrägten Stirnflächen zur Erhöhung der Brechung der Lichtstrahlen wird erreicht, dass mittels einer handelsüblichen Photodiode 18 auch optische Signale aus zwei optischen Fasern empfangen werden können. Zwischen Photodiode 18 und der Linse sowie zwischen Linse und den optischen Fasern 21 und 22 befindet sich Luft. Die aus den optischen Fasern 21 und 22, die zur Hauptleitung 3 bzw. zur Alternativleitung 4 aus Fig. 1 korrespondieren, austretenden optischen Signale treffen nach Durchlaufen der Linse direkt auf die aktive Fläche 19, was zu einem optimierten Empfang beiträgt. Im fehlerfreien Fall werden optische Signale über die Hauptleitung 3 übertragen und treffen über die optische Faser 21 auf Photodiode 18. Im Fehlerfall werden die optischen Signale über Alternativleitung 4 übertragen und treffen über die optische Faser 22 auf die Photodiode 18.

Um optische Reflexionen, z.B. aus der optischen Faser 21 austretende optische Signale, die an der aktiven Fläche 19 derart reflektiert werden, dass sie in die optische Faser 22 gelangen, zu verringern, kann die Photodiode 18 mit einer in der Zeichenebene liegenden und parallel zur aktiven Fläche 19 verlaufenden Drehachse schräg angeordnet werden.

Die parallele Anordnung der optischen Fasern 21 und 22 ist eine besonders platzsparende Variante. Dies hat Vorteile beim sogenannten packaging, d.h. wenn mehrere Photodioden, z.B. mehrerer optischer Empfänger nebeneinander platziert werden. Unter packaging wird auch der Einbau eines Diodenchips mit Faserkopplung in ein Gehäuse verstanden. Sehr häufig wird ein zylindrisches Gehäuse verwendet, an dessen Boden der Chip angebracht ist; an der Seite wird die Faser herausgeführt. Im zweiten Ausführungsbeispiel können die zwei Fasern parallel in einer Faserhalterung (-fixierung) herausgeführt werden.

Bei allen vier Ausführungsbeispielen liegt das Path-Link-Protection System aus Fig. 1 zugrunde. Dies ist im Ausschnitt als Punkt-zu-Punkt-System ausgeführt. Die Erfindung kann auch bei einem Punkt-zu-Mehrpunkt und Mehrpunkt-zu-Mehrpunkt-System angewandt werden. Eine Vielzahl von optischen Sendern sendet optische Signale über ein passives optisches Verteilnetz mit optischen Splittern oder ein aktives optisches Netz beinhaltend z.B. optische Verstärker, Add-Drop-Multiplexer und/oder Cross-Connectoren zu einer Vielzahl von optischen Empfängern. Die optischen Empfänger können auch als optische Transceiver ausgeführt sein.

Werden bei allen vier Ausführungsbeispielen die Photodiode und die Justiervorrichtungen integriert, d.h. auf einem Chip ausgeführt, so erhöht sich die Packungsdichte. Jede optische Faser kann in eine Nut auf dem Chip eingelegt werden. Dadurch kann die Kopplungsgenauigkeit erhöht werden. Zudem führt dies zu einer Kostenreduktion bei der Herstellung. Integrierte Schaltungen, die neben optischen auch elektrische Funktionen wahrnehmen, z.B. die elektrische Auswertung der empfangenen optischen Signale mittels einer integrierten Verarbeitungseinrichtung werden üblicherweise als hybride oder opto-elektronische Schaltungen bezeichnet. Somit könnte der gesamte optische Empfänger inklusive Justiervorrichtung, Photodiode und Verarbeitungseinrichtung auf einem Chip integriert werden.

Bei allen vier Ausführungsbeispielen empfängt die Photodiode optische Signale aus zwei optischen Fasern. Die Erfindung kann auch bei drei oder mehr optischen Fasern, die alle auf ein und dieselbe Photodiode gerichtet sind angewendet werden. Beim ersten Ausführungsbeispiel ist z.B. eine optische Faser senkrecht zur aktiven Fläche angeordnet. Zwei weitere optische Fasern sind beispielsweise im Winkel von 10 Grad rechts und links neben der ersten optischen Faser angeordnet. Beim zweiten Ausführungsbeispiel ist z.B. eine optische Faser senkrecht zur aktiven Fläche angeordnet. Die Stirnfläche dieser Faser ist nicht angeschrägt. Zwei weitere optische Fasern sind beispielsweise parallel rechts und links neben der ersten optischen Faser angeordnet. Die Stirnseiten der zweiten und dritten optischen Faser sind entsprechend angeschrägt. Beim dritten Ausführungsbeispiel ist z.B. eine optische Faser senkrecht zur aktiven Fläche angeordnet. Zwei weitere optische Fasern sind beispielsweise parallel rechts und links neben der ersten optischen Faser angeordnet. Die aktive Fläche der Photodiode ist derart ausgebildet, dass sie alle drei Lichtkegel aller drei Fasern umfasst. Die aktive Fläche ist z.B. oval, in Form eines Langlochs oder dergleichen ausgebildet. Drei optische Fasern könnten auch gestapelt angeordnet werden, so dass die Lichtkegel eine Art Dreieck ergeben. Die aktive Fläche hat dann beispielsweise ebenfalls die Form eines Dreiecks oder annähernd eine solche, z.B. vergleichbar drei sich überlappende Kreise. Bei vier gestapelten optischen Fasern kann die aktive Fläche auch eine runde oder quadratische Form haben, die Form eines vierblättrigen Kleeblatts oder die Fläche von vier sich überlagernden Kreisen.

Das vierte Ausführungsbeispiel kann auch mit dem dritten und/oder ersten Ausführungsbeispiel kombiniert werden, z.B. durch Verwendung einer unrunden, z.B. ovalen aktiven Fläche als aktive Fläche 19 in Fig. 5 und/oder durch in einem Winkel von 10 bis 90 Grad zueinander angeordnete optische Faserenden als Faserenden 21, 22 in Fig. 5.

## Patentansprüche

1. Optischer Empfänger (5) beinhaltend eine Photodiode (6; 10; 14),
**dadurch gekennzeichnet,**
**dass** die beiden Enden von zwei optischen Fasern (8, 9; 12, 13; 16, 17), die zur Übertragung von optischen Signalen dienen, direkt vor der aktiven Fläche (7; 11; 15) der Photodiode (6; 10; 14) derart anordbar sind, dass die Photodiode (6; 10; 14) direkt optische Signale von beiden optischen Fasern (8, 9; 12, 13; 16, 17) empfangen kann.

2. Optischer Empfänger (5) gemäß Anspruch 1, **dadurch gekennzeichnet, dass** eine mechanische Justiervorrichtung vorgesehen ist, um die optischen Fasern zu arretieren.

3. Optischer Empfänger (5) gemäß Anspruch 1, **dadurch gekennzeichnet, dass** die beiden optischen Fasern (8, 9) in einem Winkel von 10 bis 90 Grad zueinander angeordnet sind.

4. Optischer Empfänger (5) gemäß Anspruch 1, **dadurch gekennzeichnet, dass** die beiden optischen Fasern (12, 13) parallel zueinander angeordnet sind, und dass die Stirnflächen der Faserenden angeschrägt sind und zueinander einen Winkel von 90 bis 180 Grad aufweisen.

5. Optischer Empfänger (5) gemäß Anspruch 1, **dadurch gekennzeichnet, dass** die beiden optischen Fasern (16, 17) parallel zueinander angeordnet sind, und dass die aktive Fläche (15) der Photodiode (14) als ovale Fläche ausgebildet ist.

6. Photodiode (6; 10; 14), **dadurch gekennzeichnet, dass** die aktive Fläche (7; 11; 15) der Photodiode (6; 10; 14) als unrunde Fläche ausgebildet ist.

7. Photodiode (6; 10; 14) nach Anspruch 6, **dadurch gekennzeichnet, dass** die aktive Fläche (7; 11; 15) der Photodiode (6; 10; 14) als ovale Fläche ausgebildet ist.

8. Photodiode (6; 10; 14) nach Anspruch 6, **dadurch gekennzeichnet, dass** die aktive Fläche (7; 11; 15) der Photodiode (6; 10; 14) in ihrer Größe angepasst ist an die Auftreffflächen von mindestens zwei Lichtkegeln aus mindestens zwei optischen Fasern.

9. Optischer Empfänger (5) beinhaltend eine Photodiode (18),
**dadurch gekennzeichnet,**
**dass** die beiden Enden von zwei optischen Fasern (21, 22), die zur Übertragung von optischen Signalen dienen, zusammen mit einem lichtbrechenden Medium (20) derart vor der aktiven Fläche (19) der Photodiode (18) anordbar sind, dass die Photodiode (18) optische Signale von beiden optischen Fasern (21, 22) empfangen kann.

10. Optischer Empfänger (5) nach Anspruch 8, **dadurch gekennzeichnet, dass** das lichtbrechende Medium (20) als Linse, insbesondere als Kugellinse ausgeführt ist.
